# EUROPEAN PATENT APPLICATION

(11) **EP 4 221 003 A1**
(43) Date of publication of application: **02.08.2023**
(21) Application number: 21871508.4
(22) Date of filing: 22.09.2021

(54) **TIMESLOT CROSS PATH CONFIGURATION METHOD, COMPUTER DEVICE AND COMPUTER-READABLE MEDIUM**

(30) Priority: 28.09.2020 CN 202011039343
(71) Applicant: ZTE Corporation, Shenzhen, Guangdong 518057 (CN)
(72) Inventor: WEN, Jianzhong, Shenzhen, Guangdong 518057 (CN); ZHOU, Huadong, Shenzhen, Guangdong 518057 (CN); CHEN, Ran, Shenzhen, Guangdong 518057 (CN)
(74) Representative: Ipsilon
(86) International application number: PCT/CN2021/119687
(87) International publication number: WO 2022/063138

(57) **Abstract**

The embodiments of the present disclosure provide a timeslot cross path configuration method, including: receiving forwarding path description information sent by a controller; and sending, in an IGP domain where the present network node is located, a first flooding message carrying path timeslot configuration information, such that a network node on a forwarding path configures a link timeslot according to the path timeslot configuration information, so as to form a timeslot cross path, where the path timeslot configuration information is generated according to the forwarding path description information and includes a link timeslot of the present network node on the forwarding path. The present disclosure further provides a computer device and a computer readable medium.

## Description

### CROSS-REFERENCE TO RELATED APPLICATIONS

The present application claims the priority of Chinese Patent Application No.202011039343.0, filed on September 28, 2020, the contents of which are incorporated herein in their entirety by reference.

### TECHNICAL FIELD

The present disclosure relates to the field of communication technology, and in particular, to a timeslot cross path configuration method, a computer device, and a storage medium.

### BACKGROUND

Conventional synchronous digital hierarchy (SDH) networks provide a time division multiplexing (TDM) service providing a service forwarding path based on timeslot cross for a user, and the forwarding path performs centralized routing and link timeslot allocation through an SDH network manager. Configuration for enabling the service is complex (timeslot cross relationship is visible to users), and the configuration efficiency is low (the configuration needs to be distributed to all nodes on a forwarding path), and it is difficult to realize flexible networking cross-manufacturers (devices of different manufacturers are in different management domains, and end-to-end path calculation cannot be realized).

A solution for timeslot automatic allocation is provided in automatic switched optical network (ASON), path calculation is realized by distributed nodes or centralized controllers, and extension of a label distribution protocol is introduced to transmit link timeslot allocation information, thereby completing establishment of an end-to-end timeslot cross path.

With the rise of the new generation of 5G networks, an metro transport network (MTN) channel forwarding path (G.mtn) based on flexible Ethernet (FlexE) shim layer 66-bit code block timeslot cross is proposed in mobile backhaul network, but protocol deployment is simplified in 5G mobile backhaul network, and a label distribution protocol is not deployed any more, so that a solution of ASON cannot be adopted. The solution of ASON is directed to an SDH/OTN network, and even if the label distribution protocol is deployed in the 5G mobile backhaul network, the protocol needs to be modified to be applied to the MTN network. In addition, if an end-to-end timeslot cross path is created in a manner similar to the conventional SDH networks, there are also problems of complex configuration, low configuration efficiency, difficulty in networking of cross-manufacturers, and the like.

### SUMMARY

In a first aspect, the present disclosure provides a timeslot cross path configuration method applied to a network node in an interior gateway protocol (IGP) domain, and the method includes: receiving forwarding path description information sent by a controller; and sending, in the IGP domain where the present network node is located, a first flooding message carrying path timeslot configuration information, such that a network node on a forwarding path configures a link timeslot according to the path timeslot configuration information, so as to form a timeslot cross path, where the path timeslot configuration information is generated according to the forwarding path description information and includes a link timeslot of the present network node on the forwarding path.

In another aspect, the present disclosure provides a computer device, including: at least one processor; and a storage device having at least one program stored thereon, where the at least one program, when executed by the at least one processor, causes the at least one processor to implement the timeslot cross path configuration method as described above.

In another aspect, the present disclosure provides a computer readable medium, storing a computer program thereon, where the computer program, when executed by a processor, causes the processer to implement the timeslot cross path configuration method as described above.

### BRIEF DESCRIPTION OF DRAWINGS

Fig. 1 is a schematic diagram illustrating a timeslot cross path configuration method performed by a head node in an IGP domain according to the present disclosure;
Fig. 2 is a schematic diagram illustrating a timeslot cross path configuration method performed by an intermediate node in an IGP domain according to the present disclosure;
Fig. 3 is a schematic diagram illustrating a timeslot cross path configuration method performed by an intermediate node and a tail node in an IGP domain according to the present disclosure;
Fig. 4 is a schematic diagram illustrating a timeslot cross path configuration method in which each node configures a same link timeslot according to the present disclosure;
Fig. 5 is a schematic diagram illustrating a timeslot cross path configuration method in a link cross-domain scenario according to the present disclosure;
Fig. 6 is a schematic diagram illustrating a timeslot cross path configuration method in a link cross-domain scenario according to the present disclosure;
Figs. 7a and 7b are schematic diagrams illustrating formats of ISIS protocol according to the present disclosure;
Fig. 8 is a schematic diagram illustrating format of an OSPF protocol according to the present disclosure;
Figs. 9a and 9b are schematic diagrams illustrating network topologies in examples 1 and 3 of the present disclosure;
Fig. 10 is a schematic diagram illustrating forwarding path description information in example 1 of the present disclosure;
Fig. 11 is a schematic diagram illustrating a first flooding message sent by a node A in examples land 7 of the present disclosure;
Fig. 12 is a schematic diagram illustrating a link timeslot allocation result in example 1 of the present disclosure;
Fig. 13 is a schematic diagram illustrating a first flooding message sent by a node A in example 3 of the present disclosure;
Figs. 14a and 14b are schematic diagrams illustrating network topologies in examples 4 and 5 of the present disclosure;
Fig. 15 is a schematic diagram illustrating forwarding path description information in example 4 of the present disclosure;
Fig. 16 is a schematic diagram illustrating a first flooding message sent by a node A in examples 4 and 5 of the present disclosure;
Fig. 17 is a schematic diagram illustrating a second flooding message sent by a node C in example 4 of the present disclosure;
Fig. 18 is a schematic diagram illustrating link timeslot allocation results in examples 4 and 6 of the present disclosure;
Figs. 19a and 19b are schematic diagrams illustrating a network topology in example 6 of the present disclosure;
Fig. 20 is a schematic diagram illustrating a second flooding message sent by a node D in example 6 of the present disclosure;
Figs. 21a and 21b are schematic diagrams illustrating a network topology in example 7 of the present disclosure;
Fig. 22 is a schematic diagram illustrating forwarding path description information in example 7 of the present disclosure;
Fig. 23 is a schematic diagram illustrating a first flooding message sent by a node A in example 7 of the present disclosure;
Fig. 24 is a schematic diagram illustrating a link timeslot allocation result in example 7 of the present disclosure;
Fig. 25 is a schematic structural diagram of a network node device according to the present disclosure;
Fig. 26 is a schematic structural diagram of a network node device according to the present disclosure; and
Fig. 27 is a schematic structural diagram of a network node device according to the present disclosure.

### DETAIL DESCRIPTION OF EMBODIMENTS

The embodiments of present application will be described in detail below with reference to the accompanying drawings, but which may be embodied in different forms and should not be construed as limiting the scope of the present disclosure. These embodiments are provided so that the present disclosure will be thorough and complete, and will enable the person skilled in the art to fully understand the scope of the disclosure.

As used herein, the term "and/or" includes any and all combinations of one or more of the associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "comprise" and/or "be made of" used herein indicate(s) the presence of the described features, integers, operations, elements and/or components, but do not exclude the presence or addition one or more other features, integers, operations, elements, components and/or combinations thereof.

Embodiments described herein may be described with reference to plan views and/or cross-sectional views of idealized schematic diagrams of the present disclosure. Accordingly, the example illustrations may be modified in accordance with manufacturing techniques and/or tolerances. Accordingly, the embodiments are not limited to the embodiments shown in the figures, but include modifications of configurations formed by a manufacturing process. Thus, the regions illustrated in the figures are schematic, and the shapes of the regions shown in the figures illustrate specific shapes of regions of elements, but are not limited.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

The timeslot cross path configuration method includes two operations: calculating and distributing a forwarding path, and allocating link timeslot, the forwarding path may be calculated by a distributed node or a centralized controller, while the link timeslot allocation process is completed by allocating link timeslot with a distributed node and extending an IGP protocol, and finally a complete timeslot cross path is formed. In some implementations, a manner of an IGP protocol SR extension and a centralized controller deployment may be employed (the centralized controller deployment may involve a BGP-LS/PCEP deployment).

In a network initialization stage, a network topology information database is generated.

In forwarding path calculation and distribution stage, based on the network topology information database, the forwarding path calculation may be performed in the centralized controller according to the service deployment requirements of the user. There may be multiple forwarding paths (for example, a working forwarding path and a protection forwarding path of a point-to-point service, or a forwarding path of a multi-point MESH (wireless mesh network) connection service). In some implementations, a group of Adj-SIDs may be used to describe the links involved in the forwarding path by adopting SR tunnel.

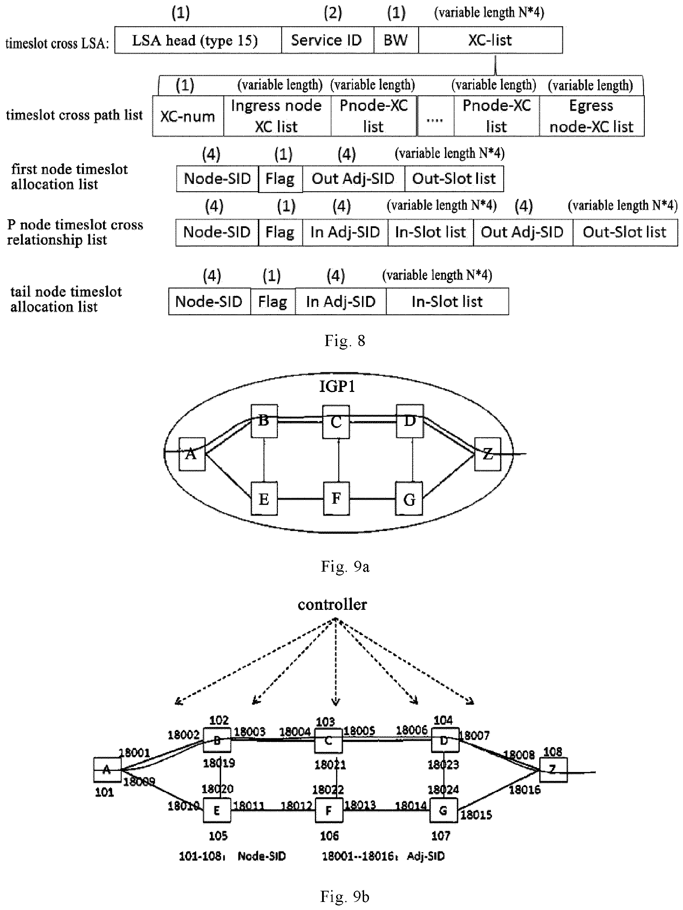

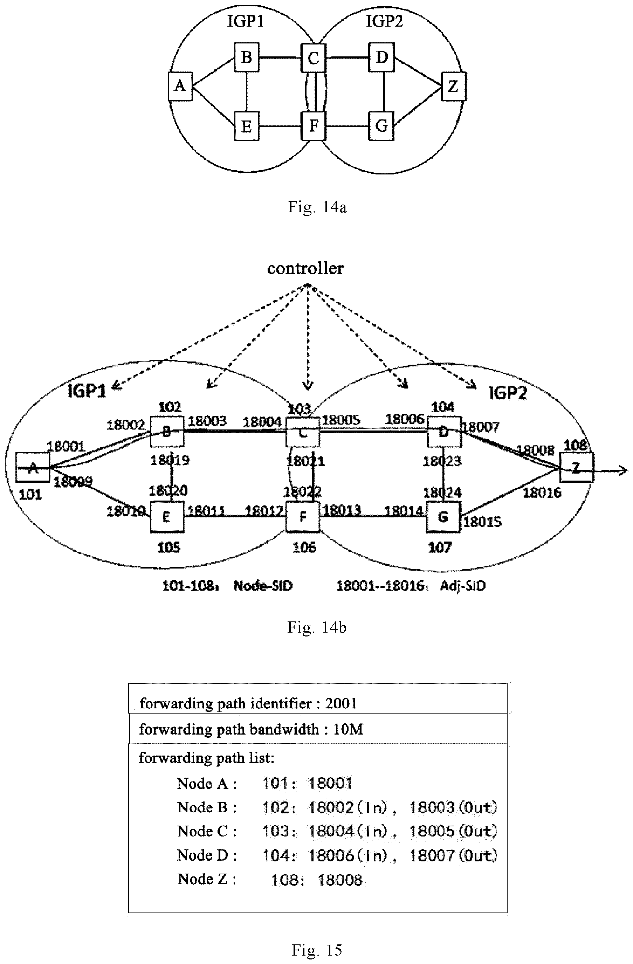

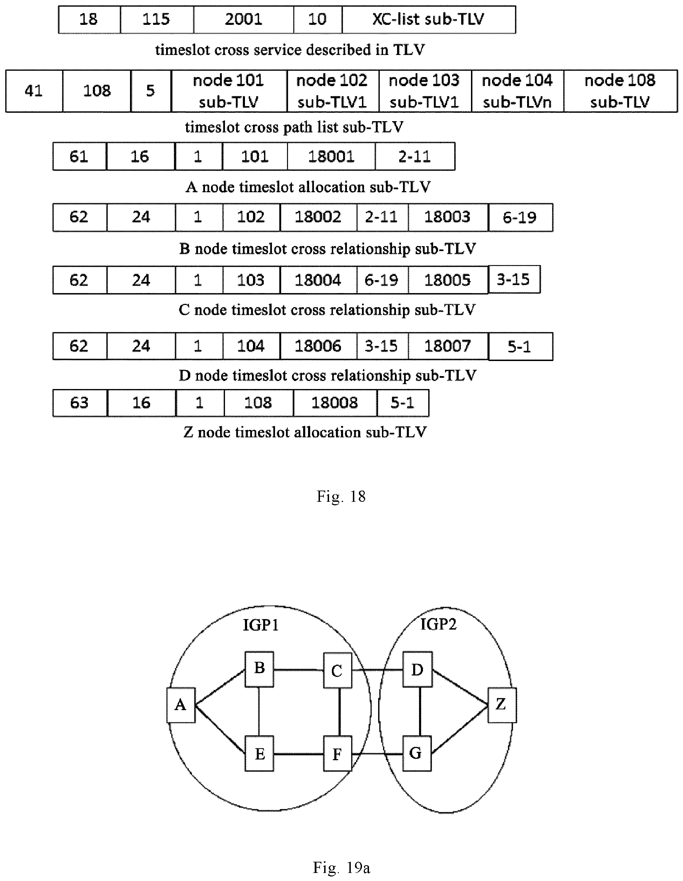

In embodiments of the present disclosure, a forwarding path being calculated by a centralized controller is taken as an example, the centralized controller distributes at least one forwarding path calculation result to network nodes, and there are the following three cases.
1. Single domain scenario: as shown in Fig. 9a, in this scenario, the forwarding path is in a single interior gateway protocol (IGP) domain, and the controller configures the forwarding path to the head node (i.e., a head node for service) in the IGP domain.
2. Node cross-domain scenario: as shown in Fig. 14a, in this scenario, the forwarding path passes through multiple IGP domains, and the boundary between the IGP domains is a network node, that is, a domain boundary node belongs to the multiple IGP domains. In the node cross-domain scenario, the controller distributes the forwarding path in the following two ways: (1) serial mode: the controller sends the forwarding path to a head node for service, the head node for service initiates a timeslot cross path configuration in a first IGP domain, and then the domain boundary node initiates a timeslot cross path configuration in a second IGP domain; (2) parallel mode: the controller distributes the forwarding path to a head node in each IGP domain simultaneously, and the head node in each IGP domain initiates a timeslot cross path configuration in the IGP domain where the head node is located simultaneously and respectively, compared with the serial mode, the parallel mode is more complex, but the efficiency is higher.
3. Link cross-domain scenario: as shown in Fig. 19a, in this scenario, the forwarding path passes through multiple IGP domains, and the boundary between the IGP domains is a link, that is, the domain boundary node only belongs to one IGP domain. There are two forwarding path allocation schemes in the link cross-domain scenario: (1) controller allocation: the controller distributes the forwarding path to a head node in each IGP domain, the head node in each IGP domain initiates a timeslot cross path configuration in the IGP domain where the head node is located, while a timeslot cross relationship configuration of a IGP domain boundary link is completed by the controller; (2) network node allocation: the controller distributes the forwarding path to a head node in each IGP domain, the head node in each IGP domain initiates a timeslot cross path configuration in the IGP domain where the head node is located, and the IGP domain boundary node and the controller cooperate to complete the timeslot cross relationship configuration of the domain boundary link. For example, under the principle of the last hop timeslot allocation, a tail node in an upstream IGP domain completes a timeslot allocation in egress direction, and then notifies the controller; the controller distributes the link timeslot allocation result to a head node in a downstream IGP domain, as a link timeslot allocation of the head node in the downstream IGP domain in ingress direction. The controller may distribute the forwarding path through a conventional network management interface (Qx), a Netconf interface, or through a PCEP protocol, a BGP protocol, or the like, and the specific implementations are not limited in the present disclosure.

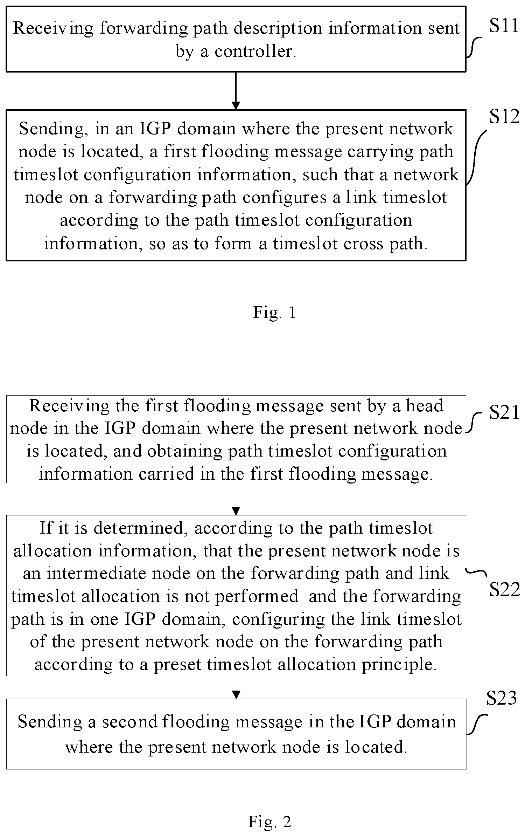

The present disclosure provides a timeslot cross path configuration method applied to a network node in an IGP domain, as shown in Fig. 1, the method includes the following operations S11 and S12.

At operation S11, receiving forwarding path description information sent by a controller.

The forwarding path description information may include a forwarding path identifier (Service ID), a forwarding path bandwidth (BW), and a forwarding path list. The forwarding path list is a sequence of network node information on the forwarding path. The network node information includes a node identifier (Node-SID) passed by the forwarding path, a link identifier (Adj-SID) passed by the forwarding path, and a timeslot list (Slot-list) of a link of the forwarding path. The links passed by the forwarding path are divided into ingress direction or egress direction, and one service may be allocated with multiple timeslots, and divided into an ingress direction or egress direction.

At operation S12, sending, in the IGP domain where the present network node is located, a first flooding message carrying path timeslot configuration information, such that a network node on a forwarding path configures a link timeslot according to the path timeslot configuration information, so as to form a timeslot cross path.

The path timeslot configuration information is generated according to the forwarding path description information and includes a link timeslot of the present network node on the forwarding path. In some implementations, the path timeslot configuration information includes a forwarding path identifier (Service ID), a bandwidth (BW), and a timeslot cross path list (XC-list) including at least the number of nodes involved in the forwarding path (XC-list) and link timeslot allocation information for each node. The link timeslot allocation information for each node at least includes: a node identifier (Node-SID), an ingress link identifier and an egress link identifier (Adj-SID), an ingress link timeslot list and an egress link timeslot list (Slot-list), and a flag for indicating the link timeslot allocation state (Flag).

In this operation, the link timeslot of the present network node on the forwarding path is filled into the timeslot cross path list, and in the timeslot cross path list, the timeslot information of other nodes on the forwarding path is filled with default values (such as all 0) or the timeslot number that the head node expects the node to configure.

The head node in the IGP domain sends, in the IGP domain and in a flooding manner, the first flooding message to all other nodes in the IGP domain where the egress link is located, and initiates the link timeslot automatic configuration of each network node on the forwarding path, thus forming the timeslot cross path of the service.

The timeslot cross path configuration method provided by the present disclosure includes the following operations: receiving forwarding path description information sent by a controller; and sending, in an IGP domain where the present network node is located, a first flooding message carrying path timeslot configuration information, such that a network node on a forwarding path configures a link timeslot according to the path timeslot configuration information, so as to form a timeslot cross path, where the path timeslot configuration information is generated according to the forwarding path description information and includes a link timeslot of the present network node on the forwarding path. According to the present disclosure, link timeslot allocation of nodes involved on a forwarding path is automatically realized on the basis that a centralized controller completes forwarding path calculation, thereby completing creation of an end-to-end timeslot cross service path, avoiding deployment of a label distribution protocol, and realizing allocation of link timeslots for a plurality of forwarding paths by using the flooding characteristic of an IGP protocol, so that the timeslot cross service path is created more efficiently. The embodiment of the present disclosure can realize automatic link timeslot allocation of MTN Channel timeslot cross paths in an MTN based on FlexE code block timeslot cross, realize automatic creation of timeslot cross service paths, which is easy to realize cross-domain/cross-manufacturer intercommunication. Compared with an ASON solution, there is no need to deploy a label distribution protocol, thus the protocol deployment is simpler, and the configuration efficiency is higher.

The timeslot allocation principle includes a last hop timeslot allocation principle and a next hop timeslot allocation principle. In some implementations, if the timeslot allocation principle of the present network node is the last hop timeslot allocation principle, the path timeslot configuration information includes an egress link timeslot of the present network node on the forwarding path. In some implementations, if the timeslot allocation principle of the present network node is the next hop timeslot allocation principle, the state of the egress link timeslot allocation flag is set to the state of not allocating link timeslot, and the egress link timeslot of the present network node on the forwarding path is configured as a preset value.

Correspondingly, after receiving the forwarding path description information sent by the controller (i.e., operation S11), and before sending the first flooding message carrying the path timeslot configuration information in the IGP domain where the present network node is located (i.e., operation S12), the timeslot cross path configuration method may further include the following operations: configuring an egress link timeslot of the present network node on the forwarding path. That is, for a head node in the IGP domain adopting the last hop timeslot allocation principle, it is necessary to configure the egress link timeslot of the present network node on the forwarding path; for a head node in the IGP domain adopting the next hop timeslot allocation principle, the egress link timeslot of the present network node on the forwarding path is no longer configured, for example, the state of the link timeslot allocation flag is set to a value indicating not allocating, and the egress link timeslot is configured to 0.

In some implementations, as shown in Fig. 2, the method for configuring a timeslot cross path performed by an intermediate node in an IGP domain provided by the present disclosure may include the following operations S21 to S23.

At operation S21, receiving a first flooding message sent by a head node in the IGP domain where the present network node is located, and obtaining path timeslot configuration information carried in the first flooding message.

At operation S22, if it is determined, according to the path timeslot configuration information, that the present network node is an intermediate node on a forwarding path and link timeslot allocation is not performed, and the forwarding path is in one IGP domain, configuring a link timeslot of the present network node on the forwarding path according to a preset timeslot allocation principle.

After receiving the first flooding message sent by the head node, other network nodes in the IGP domain identify, according to the path timeslot configuration information obtained in operation S21, whether the node is on one or more forwarding paths. If the node is not on any forwarding path, there is no need to process. If the node is identified to be on one or more forwarding paths, the link timeslot of the node on the forwarding path(s) is configured.

In this operation, the network nodes receiving the first flooding message determine that the present network node is an intermediate node on the forwarding path and does not perform link timeslot allocation, and the forwarding path is in one IGP domain, which indicates that the present network node is an intermediate node on the forwarding path in a single domain scenario that does not perform link timeslot allocation, thus the link timeslot of the present network node on the forwarding path is configured according to a preset timeslot allocation principle. When allocating link timeslots, a specified strategy may be adopted; or the link timeslots specified by the head node may be allocated preferentially, and when the specified timeslots are not available, the link timeslots are allocated according to other strategies.

At operation S23, sending a second flooding message in the IGP domain where the present network node is located, where the second flooding message carries path timeslot configuration information including the link timeslot.

In this operation, after the network node on the forwarding path completes an egress or ingress link timeslot allocation of the node, the forwarding path information and the link timeslot allocation information of the node are flooded to other nodes in the IGP domain.

In some implementations, configuring a link timeslot of the present network node on the forwarding path according to a preset timeslot allocation principle (i.e., operation S22) includes: when the timeslot allocation principle is a last hop timeslot allocation principle, configuring an egress link timeslot of the present network node on the forwarding path; and when the timeslot allocation principle is a next hop timeslot allocation principle, configuring an ingress link timeslot of the present network node on the forwarding path.

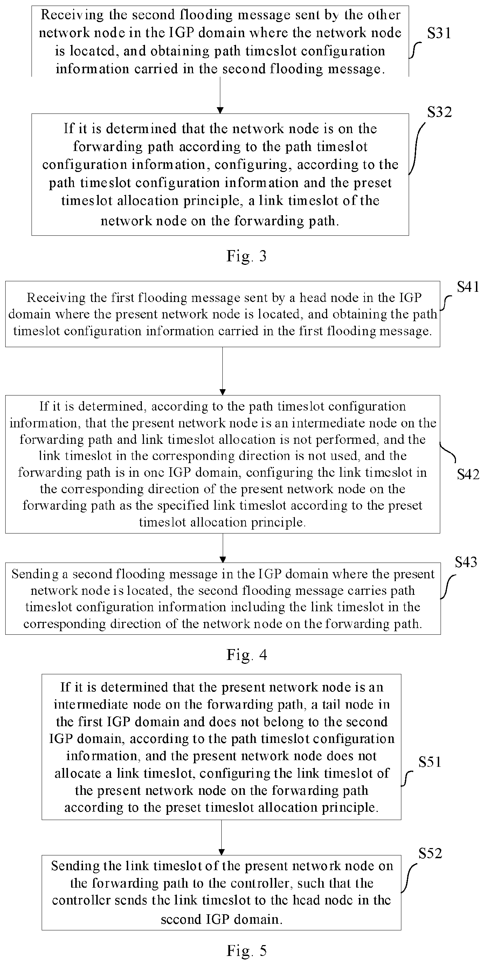

In some implementations, as shown in Fig. 3, a timeslot cross path configuration method performed by the intermediate node and the tail node in the IGP domain may include the following operations S31 to S32.

At operation S31, receiving a second flooding message sent by the other network node in the IGP domain where the present network node is located, and obtaining path timeslot configuration information carried in the second flooding message.

At operation S32, if it is determined that the present network node is on a forwarding path according to the path timeslot configuration information, configuring, according to the path timeslot configuration information and a preset timeslot allocation principle, a link timeslot of the present network node on the forwarding path.

In some implementations, configuring, according to the path timeslot configuration information and a preset timeslot allocation principle, a link timeslot of the present network node on the forwarding path (i.e., operation S32) includes: if the preset timeslot allocation principle is a last hop timeslot allocation principle, determining an egress link timeslot of a last hop network node of the present network node on the forwarding path according to the path timeslot configuration information, and configuring the egress link timeslot of the last hop network node on the forwarding path as an ingress timeslot of the present network node on the forwarding path; and if the preset timeslot allocation principle is a next hop timeslot allocation principle, determining an ingress link timeslot of a next hop network node of the present network node on the forwarding path according to the path timeslot configuration information, and configuring the ingress link timeslot of the next hop network node on the forwarding path as an egress timeslot of the present network node on the forwarding path.

In some implementations, after configuring the link timeslot of the present network node on the forwarding path according to the preset timeslot allocation principle (i.e., operation S22), and after configuring the link timeslot of the present network node on the forwarding path according to the path timeslot configuration information and the preset timeslot allocation principle (i.e., operation S32), the timeslot cross path configuration method may further include the following operations: configuring a timeslot cross relationship from the ingress link timeslot to the egress link timeslot of the present network node on the forwarding path. That is, for the intermediate node in the IGP domain, after the configuration of both the egress link timeslot and the ingress link timeslot is completed, the timeslot cross relationship from the ingress link timeslot to the egress link timeslot is established, so as to complete the timeslot cross configuration of the node.

In some implementations, after configuring the timeslot cross relationship from the ingress link timeslot to the egress link timeslot of the present network node on the forwarding path, the timeslot cross path configuration method may further include the following operations: if the present network node is the head node in the IGP domain, establishing a mapping relationship between a port at user side and the egress link timeslot, where the port at user side is an input port of a service corresponding to the forwarding path on the present network node; if the present network node is the tail node in the IGP domain, establishing a mapping relationship between a port at user side and the ingress link timeslot, where the port at user side is an output port of a service corresponding to the forwarding path on the present network node. That is, the head node on the forwarding path configures a service mapping relationship between the service at user side and the egress link timeslot of the node, and the tail node on the forwarding path configures the service mapping relationship between the service at user side and the ingress link timeslot of the node, so that the link timeslot allocation of the whole forwarding path is completed.

In some implementations, the forwarding path is a bidirectional timeslot cross service path, i.e., a first direction forwarding path and a second direction forwarding path, where the first direction and the second direction are two opposite directions. After the configuration of the first direction forwarding path is completed, the second direction forwarding path is configured.

That is, if the present network node is the head node in the IGP domain, establishing a mapping relationship between a port at user side and the ingress link timeslot, where the port at user side is an output port of a service corresponding to the forwarding path on the present network node; if the present network node is the tail node in the IGP domain, establishing a mapping relationship between a port at user side and the egress link timeslot of the present network node, where the port at user side is an input port of a service corresponding to the forwarding path on the present network node.

In some implementations, the path timeslot configuration information further includes specified link timeslots on the forwarding path for other network nodes on the forwarding path. Fig. 4 is a schematic diagram illustrating a timeslot cross path configuration method in which each node configures a same link timeslot, and as shown in Fig. 4, the method includes the following operations S41 to S43.

At operation S41, receiving a first flooding message sent by a head node in the IGP domain where the present network node is located, and obtaining path timeslot configuration information carried in the first flooding message.

At operation S42, if it is determined, according to the path timeslot configuration information, that the present network node is an intermediate node on a forwarding path and link timeslot allocation is not performed, a link timeslot in a corresponding direction is not used, and the forwarding path is in one IGP domain, configuring the link timeslot in the corresponding direction of the present network node on the forwarding path as a specified link timeslot according to a preset timeslot allocation principle.

It should be noted that, when the preset timeslot allocation principle is the last hop timeslot allocation principle, the corresponding direction is an egress direction; and when the preset timeslot allocation principle is the next hop timeslot allocation principle, the corresponding direction is an ingress direction.

In this operation, the network nodes receiving the first flooding message determine that the present network node is an intermediate node on the forwarding path and does not perform link timeslot allocation, the link timeslot in the corresponding direction is not used, and the forwarding path is in one IGP domain, which indicates that the present network node is an intermediate node on the forwarding path that does not perform link timeslot allocation in a single domain scenario, thus the link timeslot in the corresponding direction of the present network node on the forwarding path is configured according to a preset timeslot allocation principle. The link timeslot allocation strategy may be allocating the timeslots according to the timeslots specified by the head node (i.e., specified link timeslots), and when the specified link timeslots are not available, the link timeslots are allocated according to other link timeslot allocation strategies.

At operation S43, sending a second flooding message in the IGP domain where the present network node is located, where the second flooding message carries path timeslot configuration information including the link timeslot in the corresponding direction of the present network node on the forwarding path.

In some implementations, after receiving the first flooding message sent by the head node in the IGP domain where the present network node is located, and obtaining the path timeslot configuration information carried in the first flooding message (i.e., operation S21), the timeslot cross path configuration method may further include the following operations: according to the path timeslot configuration information, if the present network node is determined to be: an intermediate node on the forwarding path, a tail node in a first IGP domain and a head node in a second IGP domain, and the present network node does not perform link timeslot allocation, allocating the link timeslot of the present network node on the forwarding path according to a preset timeslot allocation principle. In this operation, the network nodes receiving the first flooding message determine that the present network node is an intermediate node on the forwarding path, a tail node in the first IGP domain and a head node in the second IGP domain, and the present network node does not perform link timeslot allocation, which indicates that the present network node is a cross-domain node that does not perform link timeslot allocation in a node cross-domain scenario, thus a link timeslot of the present network node on the forwarding path is configured according to a preset timeslot allocation principle.

After configuring the link timeslot of the present network node on the forwarding path according to the preset timeslot allocation principle, the timeslot cross path configuration method may further include the following operations.

If the forwarding path description information is distributed in a parallel distribution mode, not generating a second flooding message. That is, the cross-domain node (which is both the tail node in the first IGP domain and the head node in the second IGP domain) does not generate the second flooding message any more, but since the cross-domain node is also the head node in the second IGP domain, the cross-domain node needs to generate a first flooding message and send the first flooding message in the second IGP domain, so as to notify the link timeslot of the present network node on the forwarding path to the other network nodes in the second IGP domain, so that the network nodes on the forwarding path in the second IGP domain configure a link timeslot according to the path timeslot configuration information including the link timeslot of the present network node on the forwarding path , so as to form the timeslot cross path.

If the forwarding path description information is distributed in a serial distribution mode, sending a first flooding message in the second IGP domain, so that a network node on the forwarding path in the second IGP domain configures a link timeslot of the network node according to path timeslot configuration information carried in the first flooding message to form a timeslot cross path, where the first flooding message carries the path timeslot configuration information including a link timeslot of the present network node on a forwarding path. That is, the cross-domain node (which is both the tail node in the first IGP domain and the head node in the second IGP domain) needs to generate the first flooding message and send the first flooding message in the second IGP domain, so as to notify the link timeslot of the present network node on the forwarding path to the other network nodes in the second IGP domain, thereby initiating a link timeslot automatic configuration in the second IGP domain.

In some implementations, as shown in Fig. 5, for a timeslot cross path configuration method in a link cross-domain scenario, after receiving the first flooding message sent by the head node in the IGP domain where the present network node is located, and obtaining the path timeslot configuration information carried in the first flooding message (i.e., operation S21), the method further includes the following operations S51 and S52.

At operation S51, if it is determined that the present network node is an intermediate node on the forwarding path, a tail node in a first IGP domain and does not belong to a second IGP domain according to the path timeslot configuration information, and the present network node does not allocate a link timeslot, configuring a link timeslot of the present network node on the forwarding path according to a preset timeslot allocation principle.

In this operation, the network nodes receiving the first flooding message determine that the present network node is an intermediate node on the forwarding path, a tail node in the first IGP domain and does not belong to the second IGP domain, and the present network node does not perform link timeslot allocation, which indicates that the present network node is a tail node that does not perform link timeslot allocation in the first IGP domain in a link cross-domain scenario.

At operation S52, sending the link timeslot of the present network node on the forwarding path to the controller, such that the controller sends the link timeslot to a head node in the second IGP domain.

In this operation, in the link cross-domain scenario, the tail node that has not yet performed link timeslot allocation in the first IGP domain transfers the link timeslot configuration information of the present node to the second IGP domain through the controller.

It should be noted that, in some implementations, a timeslot cross relationship configuration of a IGP domain boundary link may also be completed by the controller.

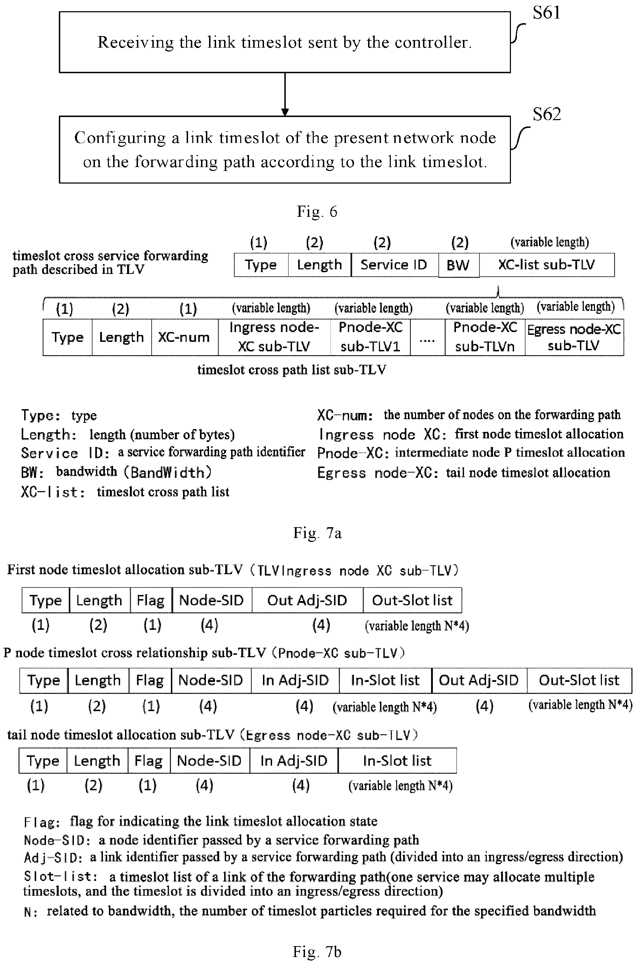

In some implementations, as shown in Fig. 6, the timeslot cross path configuration method in the link cross-domain scenario includes the following operations S61 and S62.

At operation S61, receiving a link timeslot sent by the controller.

In this operation, a head node in the second IGP domain receives the link timeslot sent by the controller, where the link timeslot is the link timeslot of the tail node in the first IGP domain on the forwarding path.

At operation S62, configuring a link timeslot of the present network node on the forwarding path according to the link timeslot.

In this operation, the head node in the second IGP domain configures the link timeslot of the tail node in the first IGP domain on the forwarding path as a reverse link timeslot of the node on the forwarding path. For example, if the link timeslot distributed by the controller to the head node in the second IGP domain is an egress link timeslot of the tail node in the first IGP domain, the head node in the second IGP domain configures the egress link timeslot of the tail node in the first IGP domain as an ingress link timeslot of the present network node.

In some implementations, the forwarding path description information includes first forwarding path description information and second forwarding path description information, and the operation of configuring the link timeslot of the present network node on the forwarding path according to the preset timeslot allocation principle includes: configuring a link timeslot of the present network node on the first forwarding path and a link timeslot of the present network node on the second forwarding path according to the preset timeslot allocation principle, where the path timeslot configuration information includes the link timeslots of the present network node on the first forwarding path and the second forwarding path.

In some implementations, the operation of determining the present network node being the intermediate node on the forwarding path according to the path timeslot configuration information includes: determining the present network node being an intermediate node on the first forwarding path and/or the second forwarding path according to the path timeslot configuration information.

The operation of configuring the link timeslot of the present network node on the forwarding path includes: if the present network node is on the first forwarding path, configuring a link timeslot of the present network node on the first forwarding path; and/or if the present network node is on the second forwarding path, configuring a link timeslot of the present network node on the second forwarding path.

That is, for a scenario where a service is configured with a working forwarding path and a protection forwarding path at the same time, link timeslots of the working forwarding path and the protection forwarding path need to be configured separately.

In the disclosed embodiment, an IGP routing protocol is extended to carry path timeslot configuration information. In some implementations, the path timeslot configuration information includes: a forwarding path identifier, a bandwidth and a timeslot cross path list, where the timeslot cross path list at least includes the number of nodes involved in the forwarding path and link timeslot allocation information for each node. The link timeslot allocation information for each node at least includes: a node identifier, an ingress link identifier and an egress link identifier, an ingress link timeslot list and an egress link timeslot list, and a flag for indicating link timeslot allocation state.

The first and second flooding messages of the present disclosure may be implemented by an ISIS protocol message or an OSPF protocol message. In the ISIS protocol, a new PDU type may be added, or a new TLV may be defined in the PDU type of the related art; in the OSPF protocol, a new LSA type may be added, or a new link type and corresponding link data may be defined in the LSA.

Figs. 7a and 7b are schematic diagrams illustrating formats of ISIS protocol according to the present disclosure, where the ISIS protocol is described in TLV manner. Fig. 7a is a TLV format described by a forwarding path, and includes: Type, Length, and path timeslot configuration information including: a forwarding path identifier (Service ID), a bandwidth (BW), and a timeslot cross path list (XC-list). The timeslot cross path list includes: Type, Length, the number of nodes on the forwarding path (XC-num), and link timeslot allocation information of each node.

Fig. 7b shows the content of the link timeslot allocation information of the head node, the intermediate node, and the tail node in the IGP domain defined by the ISIS protocol. As shown in Fig. 7b, the link timeslot allocation information of each node includes: Type, Length, a node identifier (Node-SID), an ingress link identifier (In Adj-SID) and an egress link identifier (Out Adj-SID), an ingress link timeslot list (In-Slot list) and an egress link timeslot list (Out-Slot list), and a flag (Flag) for indicating a link timeslot allocation state.

Fig. 8 is a schematic diagram illustrating format of an OSPF protocol according to the present disclosure. The OSPF protocol is different from the ISIS protocol in that the OSPF protocol is not described in a TLV manner and does not have Length field.

The present disclosure realizes the configuration of the timeslot cross relationship of the nodes on the forwarding path by extending the IGP routing protocol, thereby completing the establishment of the end-to-end timeslot cross path.

In order to clearly explain the present disclosure, the following description is made with reference to examples.

### Example 1

Example 1 is a unidirectional timeslot cross service path in a domain, and supposing that there is an SPN or IP RAN network using FlexE technology, and the timeslot cross service forwarding path of the MTN Channel in G.mtn is supported. The network topology is shown in Fig. 9a, and all nodes are in an ISIS routing domain. A unidirectional timeslot cross service is provided in the network, a service path is A-> B-> C-> D-> Z, a bandwidth is 30M (occupying 3 timeslots), and the service path requires MTN Channel to provide a forwarding path with hard isolation and determined time delay.

Initialization configuration is performed according to SR-MPLS network, node identifiers (Node-SIDs) (which are passed by the forwarding path) are allocated to network nodes, and link identifiers (Adj-SIDs) (which are passed by the forwarding path) are allocated to links. As shown in Fig. 9b, a centralized controller is used to calculate the forwarding path.

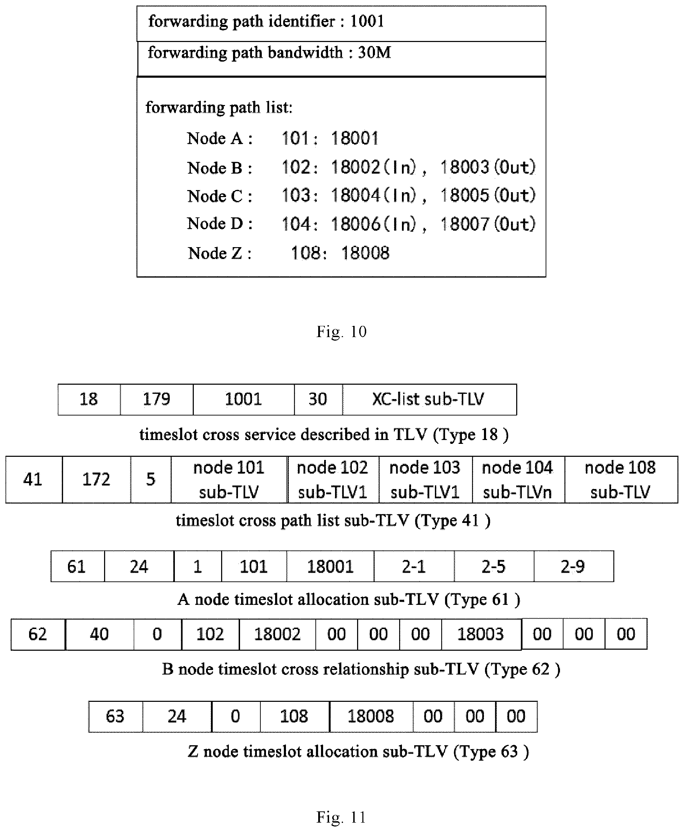

For configuring a L2VPN service, assuming that the specified service is accessed through a port1 of a node A, and is forwarded through a port2 of a node Z, and the bandwidth requirement is 30M, at this time, the controller calculates a forwarding path of A-B-C-D-Z. Assuming that the forwarding path is numbered as 1001, the path is described as: Ingress_Node:101:18001 → PNode:102:18002(In),18003(Out) → PNode:103:18004(In),18005(Out) → PNode:104:18006(In),18007(Out) → Egress_Node108:18008. The controller calculates the forwarding path description information shown in Fig. 10, and sends the forwarding path description information to the node A.

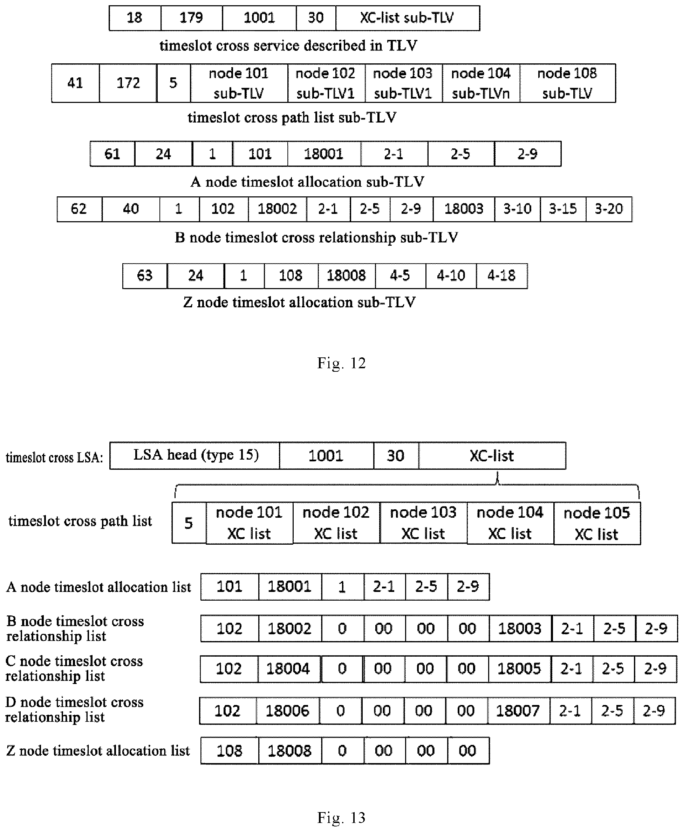

The head node A in the IGP domain initiates a link timeslot allocation process to form a timeslot cross relationship of the whole path. Assuming that a last hop timeslot allocation principle is adopted, the link timeslot allocation process includes the following operations.
(1) at the node A, as shown in Fig. 11, according to the forwarding path description information in Fig. 10, the ISIS protocol is extended, a TLV placed in the ISIS link state PDU (type 18) is constructed, and flooding is initiated. The TLV is a top TLV describing a complete timeslot cross forwarding path, and includes multi-level sub TLVs. The node A allocates egress timeslots 2-1/2-5/2-9, other nodes do not allocate link timeslots (default value is 0). The field of Flag is used to indicate whether the present node allocates an egress link timeslot, "1" presents that the egress link timeslot is allocated, "0" presents that the egress link timeslot is unallocated. The field of Length is filled according to an actual packet length.
(2) after receiving the ISIS PDU flooded by the node A, other nodes in the IGP domain analyze the path timeslot configuration information in the TLV field to judge whether the present node is on the forwarding path or not. The nodes E, F and G determine that the present node is not on the forwarding path, and then no processing is performed. The nodes B, C, D and Z determine that the present node is on the forwarding path and an egress link timeslot is not allocated, and then the egress link timeslot is allocated according to a preset link timeslot allocation strategy. The node Z is the last hop and does not need to allocate an egress link timeslot, so no processing is performed.
(3) the nodes B, C and D fill the egress link timeslot allocation result of the present node into the TLV of ISIS PDU for flooding.
(4) after receiving the ISIS PDU sent in operation (3), other nodes in the IGP domain determine whether they are on the forwarding path, if on the forwarding path, an egress link timeslot allocated by an upstream node is used as an ingress link timeslot of the present node, for example, after receiving the egress link timeslot configured by the node B, the node C uses the egress link timeslot of the node B as the ingress link timeslot of the node C, and after receiving the egress link timeslot configured by the node D, the node Z uses the egress link timeslot of the node D as the ingress link timeslot of the node Z.
(5) the nodes B, C and D configure the timeslot cross relationship of an ingress link + an ingress timeslot --> an egress link + an egress timeslot to the forwarding plane to complete timeslot cross configuration, and finally forms the link timeslot allocation result as shown in Fig. 12. It should be noted that Fig. 12 only shows the link timeslot configuration result of the nodes A, B and Z, and does not show the link timeslot configuration results of the nodes C and D.
(6) a service mapping relationship from a user port1 to the egress link (18001) + the egress timeslot (2-1/2-5/2-9) is configured at the node A, and a service de-mapping relationship from the ingress link timeslot (18008) + the ingress timeslot (4-5/4-10/4-18) to a user port2 is configured at a node Z, thereby completing end-to-end link timeslot allocation of the forwarding path and service creation configuration.

According to the scheme, a user only needs to deploy the ISIS protocol in a network, the timeslot cross configuration of each node on a forwarding path can be automatically completed through the ISIS protocol extension after the controller completes the calculation of the forwarding path, so as to form a complete end-to-end timeslot cross path, and the automatic establishment of the timeslot cross service path is realized under a condition that no new protocol deployment is added in an SPN/IP RAN network.

### Example 2

Example 2 is a bidirectional timeslot cross service path in a domain. On the basis of example 1, it is required to create a bidirectional timeslot cross service path, that is, after a user specifies a node A and a node Z, a timeslot cross service path of two paths, i.e., a path A-> B-> C-> D-> Z and a path Z-> D-> C-> B-> A, is created.

The main operations of example 2 are the same as that of example 1, with difference in operations (5) and (6).

At operation (5) of example 2, the nodes B, C and D configure not only the timeslot cross relationship of an ingress link + an ingress timeslot --> an egress link + an egress timeslot, but also a reverse cross relationship (i.e., an egress link + an egress timeslot --> an ingress link + an ingress timeslot) to the forwarding plane.

At operation (6) of example 2, the node A configures the service mapping relationship and a reverse service de-mapping relationship from the user port1 to the egress link (18001) + the egress timeslot (2-1/2-5/2-9) of the node A, and the node Z configures the service mapping relationship and a reverse service de-mapping relationship from the user port2 to the ingress link timeslot (18008) + the ingress timeslot (4-5/4-10/4-18).

### Example 3

Example 3 is an end-to-end timeslot allocated according to intention of the head node in the domain. On the basis of example 1, in order to realize a lowest end-to-end delay or other special requirements, it is desirable that the end-to-end use a same timeslot number as much as possible, while adopting the extended OSPF protocol extension to the transmit of link timeslot allocation information.

The main operations of example 3 are the same as that of example 1, with the difference in operations (1) and (2).

At operation (1) of example 3, at node A, the OSPF protocol is extended. As shown in Fig. 8, a new LSA (assuming a type of LSA is 15, indicating a timeslot cross LSA) is defined in the OSPF protocol, to describe a complete timeslot cross forwarding path. The node A configures the egress timeslots 2-1/2-5/2-9 and expects the remaining nodes to also allocate the same timeslots, therefore, as shown in Fig. 13, all fields of the egress timeslots are filled with 2-1/2-5/2-9.

In operation (2) of example 3, after receiving the LSA flooded by the node A, other nodes in the IGP domain analyze the path timeslot configuration information carried in the message, and determine whether they are on the forwarding path. The nodes E, F and G determine that the present node is not on the forwarding path, and then no processing is performed. The nodes B, C and D determine that the present node is on the forwarding path and an egress link timeslot is not allocated, and then the egress link timeslot is allocated according to the expected timeslots 2-1/2-5/2-9 filled by the node A. It is judged whether the timeslot is used or not, if not used, the nodes B, C and D allocate the egress timeslot 2-1/2-5/2-9, otherwise, the egress timeslot is additionally allocated according to a certain link timeslot allocation strategy. The node Z is the last hop and does not need to allocate an egress link timeslot, so no processing is performed.

### Example 4

Example 4 is a unidirectional timeslot cross service path in a node cross-domain scenario, and supposing that there is an SPN or IP RAN network using FlexE technology, and the timeslot cross service forwarding path of the MTN Channel in G.mtn is supported. The network topology is shown in Fig. 14a. The entire network is divided into two ISIS routing domains, nodes A, B, C, E and F are in the IGP1 domain, nodes C, D, F, G and Z are in the IGP2 domain, and the nodes C and F are in two IGP domains at the same time. A unidirectional timeslot cross service is provided in the network, a service path is A-> B-> C-> D-> Z, a bandwidth is 10M (occupying one timeslot), and the service path requires MTN Channel to provide a forwarding path with hard isolation and determined time delay.

Initialization configuration is performed according to SR-MPLS network, Node-SIDs are allocated to network nodes, and Adj-SIDs are allocated to network links. As shown in FIG. 14b, a centralized controller is used to calculate the forwarding path.

For configuring a L2VPN service, assuming that the specified service is accessed through a port1 of the node A, and is forwarded through a port2 of the node Z, and the bandwidth requirement is 10M, at this time, the controller calculates a forwarding path of A-B-C-D-Z. Assuming that the forwarding path is numbered as 2001, the path is described as: Ingress _Node:101:18001 → PNode:102:18002(In),18003(Out) → PNode:103:18004(In),18005(Out) → PNode:104:18006(In),18007(Out) → Egress_Node108:18008. The controller calculates the forwarding path description information shown in Fig. 15. Assuming that a parallel mode is adopted, the controller simultaneously distributes the forwarding path description information to the node A (a head node in the IGP1 domain) and the node C (a head node in the IGP2 domain).

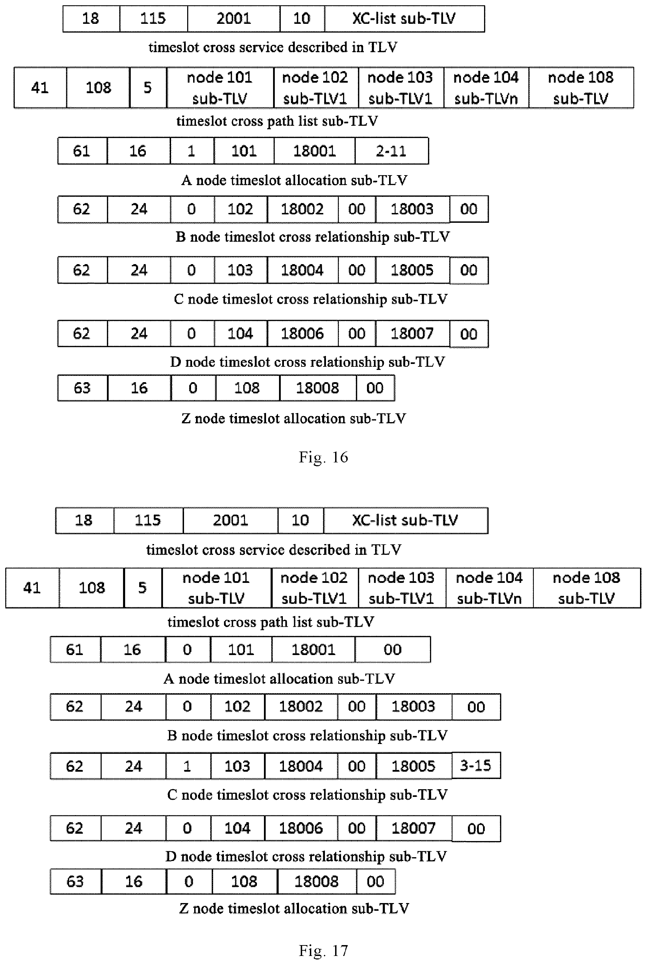

The node A initiates a link timeslot allocation process in the IGP1 domain where the egress link is located, and the node C initiates a link timeslot allocation process in the IGP2 domain where the egress link is located, so as to form a timeslot cross relationship of the whole path. Assuming that a last hop timeslot allocation principle is adopted, and the ISIS protocol extension scheme is same as that in example 1, that is, TLV formats shown in Figs. 7a and 7b are adopted. The link timeslot allocation process includes the following operations.
(1) an ISIS LSP flooding is initiated at the node A, and the carried TLV is shown in Fig. 16. The node A allocates an egress timeslot 2-11, and other nodes do not allocate link timeslots (default value is 0). An ISIS LSP flooding is initiated at the node C, and the carried TLV is shown in Fig. 17. The node C allocates an egress timeslot 3-15, and other nodes do not allocate link timeslots (default value is 0).
(2) after receiving the ISIS PDU flooded by the node A, other nodes in the IGP1 domain analyze the path timeslot configuration information in the TLV field to judge whether the present node is on the forwarding path or not. The nodes E and F determine that the present node is not on the forwarding path, and then no processing is performed. The nodes B and C determine that the present node is on the forwarding path and an egress link timeslot is not allocated, and then the egress link timeslot is allocated according to a preset link timeslot allocation strategy. Similarly, in the IGP2 domain, the D node also allocates an egress link timeslot. The node Z is a tail node in the IGP2 domain and does not need to allocate an egress link timeslot.
(3) the node B fills the egress link timeslot allocation result of the node B into the TLV of the ISIS PDU and performs flooding in the IGP1 domain. The node C does not perform flooding in the IGP1 domain any more, and the node D fills the egress link timeslot allocation result of the node D into the TLV of the ISIS PDU and performs flooding in the IGP2 domain.
(4) after receiving the ISIS PDU sent in operation (3), other node in the IGP domains determine whether they are on the forwarding path, if on the forwarding path, an egress link timeslot allocated by the upstream node is used as an ingress link timeslot of the present node, for example, after receiving the egress link timeslot allocated by the node B, the node C uses the egress link timeslot of the node B as the ingress link timeslot of the node C, and after receiving the egress link timeslot allocated by the node D, the node Z uses the egress link timeslot of the node D as the ingress link timeslot of the node Z.
(5) the nodes B, C and D configure the timeslot cross relationship of an ingress link + an ingress timeslot --> an egress link + an egress timeslot to the forwarding plane to complete timeslot cross configuration, and finally forms the link timeslot allocation result as shown in Fig. 18.
(6) a service mapping relationship from a user port1 to the egress link (18001) + the egress timeslot (2-11) is configured at the node A, and a service de-mapping relationship from the ingress link timeslot (18008) + the ingress timeslot (5-1) to a user port2 is configured at a node Z, thereby completing end-to-end link timeslot allocation of a forwarding path and service creation configuration.

### Example 5

Example 5 is a unidirectional timeslot cross service path in a node cross-domain scenario, and the difference between example 5 and example 4 is that a serial mode is adopted during cross-domain link timeslot allocation.

The network initialization configuration process and the process of the controller for calculating the forwarding path for A-B-C-D-Z are the same as in example 4. The controller distributes the forwarding path description information shown in Fig. 15 to the node A (a head node in the IGP1 domain). Different for the example 4, the forwarding path is not distributed to the node C (a head node in the IGP2 domain).

The node A initiates a link timeslot allocation process in the IGP1 domain where the egress link is located, and the link timeslot allocation process includes the following operations
(1) an ISIS LSP flooding is initiated at the node A, and the carried TLV is shown in Fig. 16. The node A allocates an egress timeslot 2-11, and other nodes do not allocate link timeslots (default value is 0).
(2) after receiving the ISIS PDU flooded by the node A, other nodes in the IGP1 domain analyze the path timeslot configuration information in the TLV field to judge whether the present node is on the forwarding path or not. The nodes E and F determine that the present node is not on the forwarding path, and then no processing is performed. The nodes B and C determine that the present node is on the forwarding path and an egress link timeslot is not allocated, and then the egress link timeslot is allocated.
(3) in the IGP1 domain, the node B fills the egress link timeslot allocation result of the node B into the TLV of the ISIS PDU and performs flooding in the IGP1 domain. After allocating the egress link timeslot, the node C judges that the egress link is in the IGP2 domain, so the node C initiates a link timeslot allocation process in the IGP2 domain and triggers performing of the operations (2) and (3) in the IGP2 domain, that is, the node D allocates an egress link timeslot and floods the egress link timeslot allocation result.
(4) after receiving the egress link timeslot allocated by the upstream node, other node in IGP1 domain and/or IGP2 domain uses the egress link timeslot as an ingress link timeslot of the present node, for example, after receiving the egress link timeslot allocated by the node B, the node C uses the egress link timeslot of the node B as the ingress link timeslot of the node C, and after receiving the egress link timeslot allocated by the node D, the node Z uses the egress link timeslot of the node D as the ingress link timeslot of the node Z.
(5) the nodes B, C and D configure the timeslot cross relationship of an ingress link + an ingress timeslot --> an egress link + an egress timeslot to the forwarding plane to complete timeslot cross configuration, which is same as example 4.
(6) service mapping/de-mapping relationship configurations are completed at the node A and the node Z respectively, which is same as example 4, thereby completing end-to-end link timeslot allocation of a forwarding path and service creation configuration.

### Example 6

Example 6 is a unidirectional timeslot cross service path in a link cross-domain scenario. Example 6 is similar to example 4, but the way of partitioning is different. As shown in Fig. 19a, nodes A, B, C, E and F are in IGP1 domain, nodes D, G and Z are in IGP2 domain, and links C-D and F-G are cross-domain links.

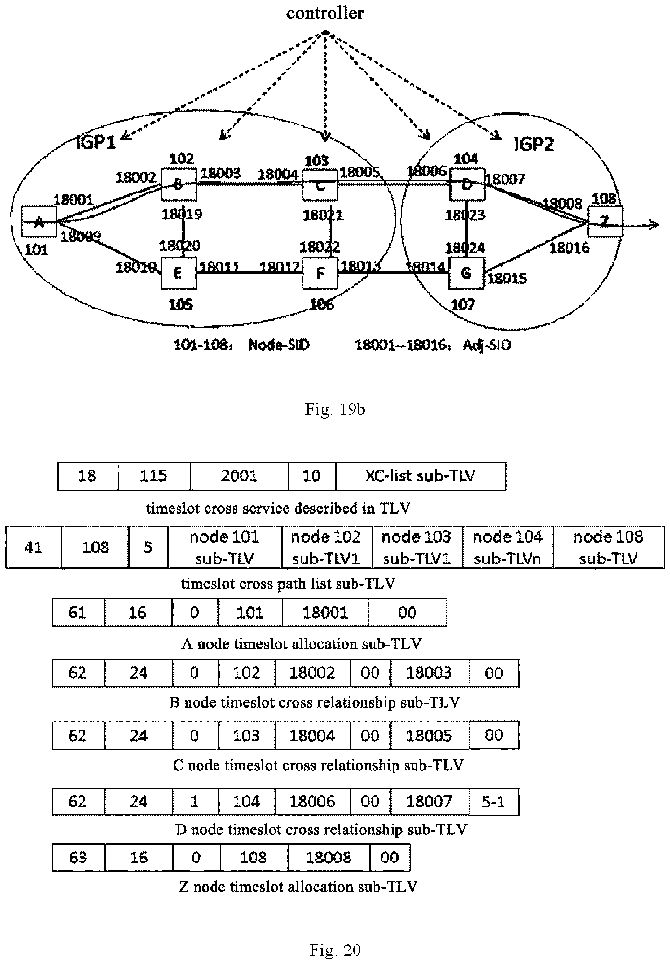

Same as example 4, as shown in Fig. 19b, the configuration is initialized according to SR-MPLS network. The controller calculates the forwarding path of A-B-C-D-Z, and sends the forwarding path description information shown in Fig. 15 to the node A (a head node in the IGP1 domain) and the node D (a head node in the IGP2 domain).

The node A initiates a link timeslot allocation process in the IGP1 domain where the egress link is located, and the node D initiates a link timeslot allocation process in the IGP2 domain where the egress link is located, so as to form a complete path timeslot cross relationship. Assuming that a last hop timeslot allocation principle is adopted, the ISIS protocol extension scheme is same as that in example 1, that is, TLV formats shown in Figs. 7a and 7b are adopted. The link timeslot allocation process includes the following operations.
(1) an ISIS LSP flooding is initiated at the node A, and the carried TLV is shown in Fig. 16. The node A allocates an egress timeslot 2-11, and other node do not allocate link timeslots (default value is 0). An ISIS LSP flooding is initiated at the node D, and the carried TLV is shown in Fig. 20. The D node allocates an egress timeslot 5-1, and other nodes do not allocate link timeslots (default value is 0).
(2) after receiving the ISIS PDU flooded by the node A, other nodes in the IGP1 domain analyze the path timeslot configuration information in the TLV field to judge whether the present node is on the forwarding path or not. The nodes E and F determine that the present node is not on the forwarding path, and then no processing is performed. The nodes B and C determine that the present node is on the forwarding path and an egress link timeslot is not allocated, and then the egress link timeslot is allocated according to a preset link timeslot allocation strategy. After receiving the ISIS PDU flooded by the node D, the node Z in the IGP2 domain does not need to allocate an egress link timeslot because it is a tail node
(3) the node B fills the egress link timeslot allocation result of the node B into the TLV of ISIS PDU and performs flooding in the IGP1 domain. The node C is a tail node in the IGP1 domain but not a tail node on the service forwarding path, thus the allocated egress link timeslot is reported to the controller.
(4) after receiving the ISIS PDU sent in operation (3), other node in IGP1 domain and/or in IGP2 domain determine whether they are on the forwarding path, if on the forwarding path, an egress link timeslot allocated by the upstream node is used as an ingress link timeslot of the present node, for example, after receiving the egress link timeslot allocated by the node B, the node C uses the egress link timeslot of the node B as the ingress link timeslot of the node C, and after receiving the egress link timeslot allocated by the node D, the node Z uses the egress link timeslot of the node D as the ingress link timeslot of the node Z. The controller distributes the egress link timeslot allocated by the node C to the node D, and the node D uses the egress link timeslot of the node C as the ingress link timeslot of the node D.
(5) the nodes B, C and D configure the timeslot cross relationship of an ingress link + an ingress timeslot --> an egress link + an egress timeslot to the forwarding plane to complete timeslot cross configuration, and finally forms the link timeslot allocation result as shown in Fig. 18.
(6) service mapping/de-mapping relationship configurations are completed at the node A and the node Z respectively, which is same as example 4, thereby completing end-to-end link timeslot allocation of a forwarding path and service creation configuration.

### Example 7

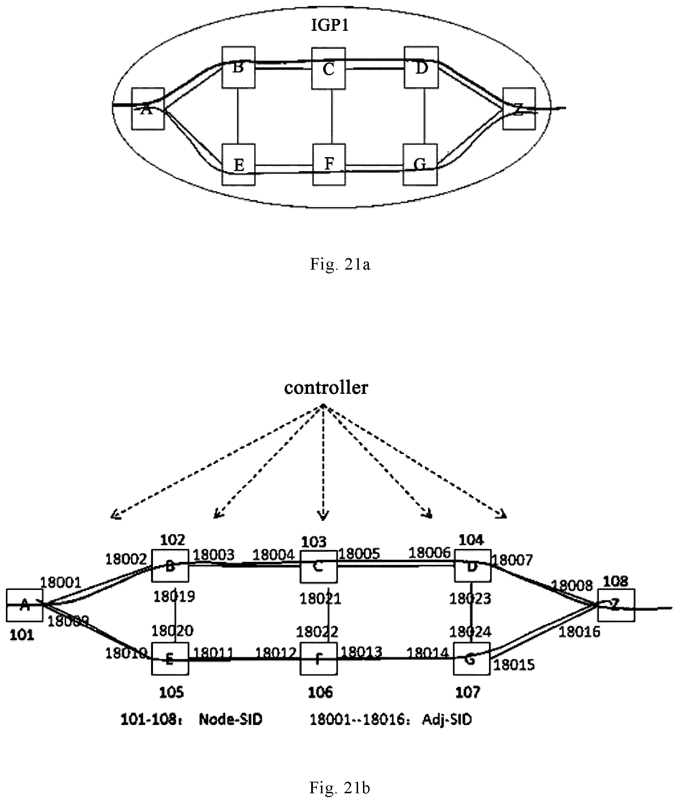

Example 7 is a multiple unidirectional timeslots cross service path in a domain. On the basis of example 1, a working forwarding path and a protection forwarding path for a service specified by a user are configured at the same time. The networking and service requirements are shown in Fig. 21a. the working forwarding path is A -> B -> C -> D -> Z, the bandwidth is 30M (occupying three timeslots), and the protection forwarding path is A -> E -> F -> G -> Z.

Initialization configuration is performed according to SR-MPLS network, Node-SIDs are allocated to network nodes, and Adj-SIDs are allocated to network links. As shown in Fig. 21b, a centralized controller is used to calculate the forwarding path.

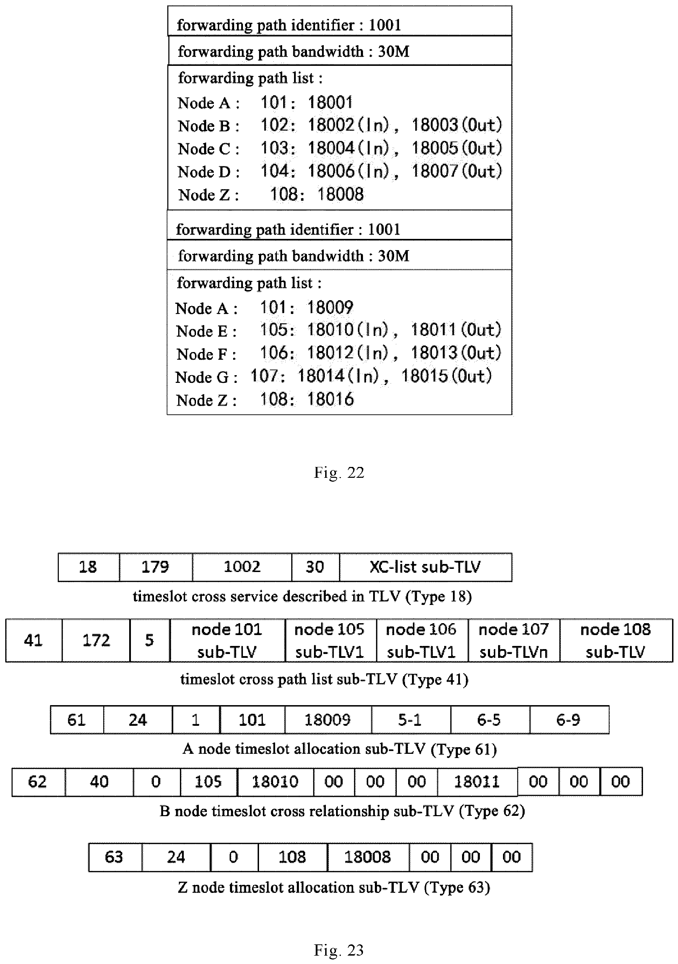

For configuring a L2VPN service, assuming that the specified service is accessed through a port1 of the node A, and is forwarded through a port2 of the node Z, and the bandwidth requirement is 30M, at this time, the controller calculates the working forwarding path A-B-C-D-Z and a protection forwarding path A -> E -> F -> G -> Z. As shown in Fig. 22, the controller distributes the description information of the working forwarding path and the protection forwarding path to the node A.

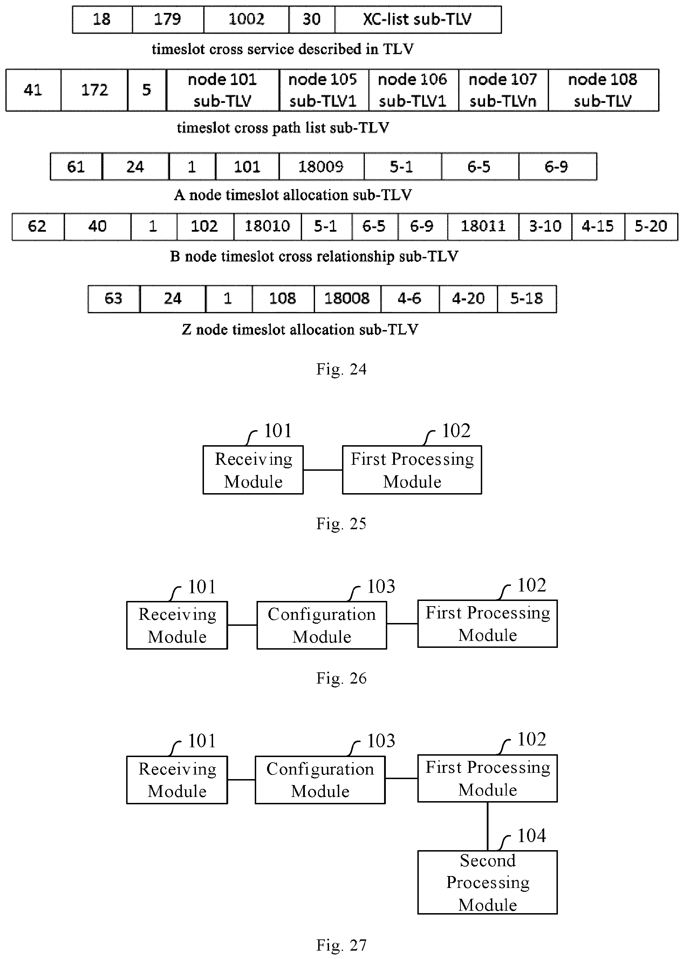

The head node A in the IGP domain initiates a link timeslot allocation process to form a timeslot cross relationship of the whole path. Assuming that a last hop timeslot allocation principle is adopted, the link timeslot allocation process includes the following operations.
(1) at the node A, according to the forwarding path description information in Fig. 22, the ISIS protocol is extended, two TLVs placed in the PDU (type 18) of the ISIS link state are constructed, and flooding is initiated. The TLV content filled of the working forwarding path is shown in Fig. 11, and the TLV content filled of the protection forwarding path is shown in Fig. 23 (without configuration information of the nodes F and G), and the node A configures egress link timeslots of the present node on both the working forwarding path and the protection forwarding path.
(2) after receiving the ISIS PDU flooded by the node A, other nodes in the IGP domain analyze the path timeslot configuration information in the TLV field to judge whether the present node is on the working/protection forwarding path or not. The nodes B, C, D and Z determine that the present node is on the working forwarding path, the nodes E, F and G determine that the present node is on the protection forwarding path, therefore an egress link timeslot allocation is needed. The node Z is the last hop and does not need to allocate an egress link timeslot, so no processing is performed.
(3) the nodes B, C and D fill the egress link timeslot allocation result of the present node into the TLV of the working forwarding path of the ISIS PDU for flooding, and the nodes E, F and G fill the egress link timeslot allocation result of the present node into the TLV of the protection forwarding path of the ISIS PDU for flooding.
(4) after receiving the ISIS PDU sent in operation (3), other nodes in the IGP domain determine whether they are on the working/protection forwarding path, if on the forwarding path, an egress link timeslot allocated by the upstream node is used as an ingress link timeslot of the present node, for example, after receiving the egress link timeslot configured by the node B, the node C uses the egress link timeslot of the node B as the ingress link timeslot of the node C, and after receiving the egress link timeslot configured by the node D, the node Z uses the egress link timeslot of the node D as the ingress timeslot of the node Z.
(5) the nodes B, C, D, E, F and G configure the timeslot cross relationship of an ingress link + an ingress timeslot --> an egress link + an egress timeslot to the forwarding plane to complete timeslot cross configuration, and finally forms the working forwarding path link timeslot allocation result as shown in Fig. 12 and the protection forwarding path link timeslot allocation result as shown in Fig. 24.
(6) service mapping/de-mapping relationship from the user port to the network service forwarding path and the working/protection relationship of the service forwarding path are completed at the node A and the node Z respectively, thereby completing end-to-end link timeslot allocation of a forwarding path and service creation configuration.

Under the scheme, a user only needs to deploy an ISIS protocol in a network, that is, the timeslot cross configuration of each node on a plurality of forwarding paths can be automatically completed through the ISIS protocol extension after the controller completes the calculation of the forwarding path, so as to form a complete end-to-end timeslot cross path, and the automatic establishment of the timeslot cross service path is realized under the condition that no new protocol deployment is added in the SPN/IP RAN network.

Based on the same technical concept, the present disclosure further provides a network node device applied to a network node in an interior gateway protocol (IGP) domain, as shown in Fig. 25, the network node device includes a receiving module 101 and a first processing module 102.

The receiving module 101 is configured to receive forwarding path description information sent by a controller.

The first processing module 102 is configured to send a first flooding message carrying path timeslot configuration information in the IGP domain where the present network node is located, such that a network node on a forwarding path configures a link timeslot according to the path timeslot configuration information, so as to form a timeslot cross path, where the path timeslot configuration information is generated according to the forwarding path description information and includes a link timeslot of the present network node on the forwarding path.

In some implementations, if a timeslot allocation principle of the present network node is a last hop timeslot allocation principle, the path timeslot configuration information includes an egress link timeslot of the present network node on the forwarding path; if the timeslot allocation principle of the present network node is a next hop timeslot allocation principle, the state of the egress link timeslot allocation flag is set to the state of not allocate link timeslot, and the egress link timeslot of the present network node on the forwarding path is configured as a preset value.

As shown in Fig. 26, the network node device may further include a configuration module 103 configured to allocate an egress link timeslot of the present network node on the forwarding path after the receiving module 101 receives the forwarding path description information sent by the controller and before the first processing module 102 sends the first flooding message carrying path timeslot configuration information in the IGP domain where the present network node is located.

In some implementations, the receiving module 101 is further configured to receive the first flooding message sent by a head node in an IGP domain where the present network node is located, and obtain the path timeslot configuration information carried in the first flooding message.

The configuration module 103 is further configured to configure the link timeslot of the present network node on the forwarding path according to a preset timeslot allocation principle if it is determined, according to the path timeslot configuration information, that the present network node is an intermediate node on the forwarding path and does not perform link timeslot allocation and the forwarding path is in one IGP domain.

The first processing module 102 is further configured to send a second flooding message in the IGP domain where the present network node is located, where the second flooding message carries the path timeslot configuration information including the link timeslot.

In some implementations, the configuration module 103 is configured to configure an egress link timeslot of the present network node on the forwarding path if the timeslot allocation principle is the last hop timeslot allocation principle; and configure an ingress link timeslot of the present network node on the forwarding path if the timeslot allocation principle is the next hop timeslot allocation principle.

In some implementations, the receiving module 101 is further configured to receive the second flooding message sent by other network node in the IGP domain where the present network node is located, and obtain the path timeslot configuration information carried in the second flooding message.

The configuration module 103 is further configured to configure the link timeslot of the present network node on the forwarding path according to the path timeslot configuration information and the preset timeslot allocation principle if the present network node is determined to be on the forwarding path according to the path timeslot configuration information.

In some implementations, the configuration module 103 is configured to determine, if the preset timeslot allocation principle is the last hop timeslot allocation principle and according to the path timeslot configuration information, an egress link timeslot of the last hop network node of the present network node on the forwarding path, and configure the egress timeslot of the last hop network node on the forwarding path as an ingress timeslot of the present network node on the forwarding path; and determine, if the preset timeslot allocation principle is the next hop timeslot allocation principle and according to the path timeslot configuration information, an ingress link timeslot of the next hop network node of the present network node on the forwarding path, and configure the ingress timeslot of the next hop network node on the forwarding path as an egress timeslot of the present network node on the forwarding path.

In some implementations, the configuration module 103 is further configured to configure a timeslot cross relationship from the ingress link timeslot to the egress link timeslot of the present network node on the forwarding path, after the link timeslot of the present network node on the forwarding path is configured according to the preset timeslot allocation principle, and after the link timeslot of the present network node on the forwarding path is configured according to the path timeslot configuration information and the preset timeslot allocation principle.

In some implementations, as shown in Fig. 27, the network node device further includes a second processing module 104 configured to, after the timeslot cross relationship from the ingress link timeslot to the egress link timeslot of the present network node on the forwarding path is configured, if the present network node is a head node in the IGP domain where the present network node is located, establish a mapping relationship between a port at user side and the egress link timeslot, where the port at user side is an input port of a service corresponding to the forwarding path on the present network node; and if the present network node is a tail node in the IGP domain, establishing a mapping relation between a port at user side and the ingress link timeslot, where the port at user side is an output port of a service corresponding to the forwarding path on the present network node.

In some implementations, the path timeslot configuration information further includes specified link timeslots on the forwarding path for other network nodes on the forwarding path. The receiving module 101 is further configured to receive the first flooding message sent by the head node in the IGP domain where the present network node is located, and obtain the path timeslot configuration information carried in the first flooding message.

The configuration module 103 is further configured to: according to the path timeslot configuration information, if it is determined that the present network node is an intermediate node on the forwarding path and link timeslot allocation is not performed, a link timeslot in a corresponding direction is not used, and the forwarding path is in one IGP domain, configure, according to the preset timeslot allocation principle, the link timeslot in the corresponding direction of the present network node on the forwarding path as the specified link timeslot, where if the preset timeslot allocation principle is the last hop timeslot allocation principle, the corresponding direction is an egress direction; and if the preset timeslot allocation principle is the next hop timeslot allocation principle, the corresponding direction is an ingress direction.

The first processing module 102 is further configured to send the second flooding message in the IGP domain where the present network node is located, where the second flooding message carries the path timeslot configuration information including the link timeslot in the corresponding direction of the present network node on the forwarding path.

In some implementations, the configuration module 103 is further configured to: according to the path timeslot configuration information, if it is determined that the present network node is an intermediate node on the forwarding path, a tail node in the first IGP domain and a head node in the second IGP domain, and the present network node does not perform link timeslot allocation, configure, according to the preset timeslot allocation principle, the link timeslot of the present network node on the forwarding path, after the receiving module 101 receives the first flooding message sent by the head node in an IGP domain where the present network node is located, and obtains the path timeslot configuration information carried in the first flooding message.

In some implementations, the first processing module 102 is further configured to, if the forwarding path description information is distributed in a serial distribution mode, send the first flooding message in the second IGP domain, so that network nodes on the forwarding path in the second IGP domain configure a link timeslot of the present network node according to the path timeslot configuration information carried in the first flooding message, to form the timeslot cross path, where the first flooding message carries the path timeslot configuration information including the link timeslot of the present network node on the forwarding path.

In some implementations, the configuration module 103 is configured to: according to the path timeslot configuration information, if it is determined that the present network node is an intermediate node on the forwarding path, a tail node in the first IGP domain and does not belong to the second IGP domain, and the present network node does not perform link timeslot allocation, configure, according to the preset timeslot allocation principle, the link timeslot of the present network node on the forwarding path; and the first processing module 102 is further configured to send the link timeslot of the present network node on the forwarding path to the controller, so that the controller sends the link timeslot to a head node in the second IGP domain.

In some implementations, the forwarding path description information includes first forwarding path description information and second forwarding path description information, and the configuration module 103 is further configured to configure a link timeslot of the present network node on the first forwarding path and a link timeslot on the second forwarding path according to the preset timeslot allocation principle, where the path timeslot configuration information includes link timeslots of the present network node on the first forwarding path and the second forwarding path.

In some implementations, the configuration module 103 is configured to determine that the present network node is an intermediate node on the first forwarding path and/or the second forwarding path according to the path timeslot configuration information; if the present network node is on the first forwarding path, a link timeslot of the present network node on the first forwarding path is configured; and/or if the present network node is on the second forwarding path, a link timeslot of the present network node on the second forwarding path is configured.

In some implementations, the first flooding message and the second flooding message are ISIS protocol messages or OSPF protocol messages; the path timeslot configuration information includes a forwarding path identifier, a bandwidth and a timeslot cross path list. The timeslot cross path list at least includes the number of nodes related to the forwarding path and link timeslot allocation information of each node. The link timeslot allocation information of each node at least includes a node identifier, an ingress link identifier, an egress link identifier, an ingress link timeslot list, an egress link timeslot list and a flag for indicating the link timeslot allocation state.

The present disclosure also provides a computer device, including: at least one processor; and a storage device having at least one program stored thereon, the at least one program, when executed by the at least one processor, causes the at least one processor to implement the timeslot cross path configuration method as described above.

The present disclosure also provides a computer readable medium, storing a computer program thereon, the computer program, when executed by a processor, causes the processer to implement the timeslot cross path configuration method as described above.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable storage medium which may include a computer storage medium (or non-transitory medium) or a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. A computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed example embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A timeslot cross path configuration method, applied to a network node in an interior gateway protocol (IGP) domain, comprising:
receiving forwarding path description information sent by a controller; and
sending, in the IGP domain where the present network node is located, a first flooding message carrying path timeslot configuration information, such that a network node on a forwarding path configures a link timeslot according to the path timeslot configuration information, so as to form a timeslot cross path,
wherein the path timeslot configuration information is generated according to the forwarding path description information and comprises a link timeslot of the present network node on the forwarding path.

2. The method according to claim 1, wherein in response to that a timeslot allocation principle of the present network node is a last hop timeslot allocation principle, the path timeslot configuration information comprises an egress link timeslot of the present network node on the forwarding path;
in response to that the timeslot allocation principle of the present network node is a next hop timeslot allocation principle, a state of the egress link timeslot allocation flag is set to a state of not allocating link timeslot, and the egress link timeslot of the present network node on the forwarding path is configured as a preset value; and
after receiving the forwarding path description information sent by the controller, and before sending, in the IGP domain where the present network node is located, the first flooding message carrying the path timeslot configuration information, the method further comprises:
configuring the egress link timeslot of the present network node on the forwarding path.

3. The method of claim 2, further comprising:
receiving the first flooding message sent by a head node in the IGP domain where the present network node is located, and obtaining the path timeslot configuration information carried in the first flooding message;
according to the path timeslot configuration information, in response to that the present network node is determined to be an intermediate node on the forwarding path and does not allocate a link timeslot, and the forwarding path is in one IGP domain, configuring the link timeslot of the present network node on the forwarding path according to a preset timeslot allocation principle; and
sending a second flooding message in the IGP domain where the present network node is located, wherein the second flooding message carries the path timeslot configuration information comprising the configured link timeslot.

4. The method of claim 3, wherein configuring the link timeslot of the present network node on the forwarding path according to the preset timeslot allocation principle comprises:
in response to that the timeslot allocation principle is the last hop timeslot allocation principle, configuring the egress link timeslot of the present network node on the forwarding path; and
in response to that the timeslot allocation principle is the next hop timeslot allocation principle, configuring an ingress link timeslot of the present network node on the forwarding path.

5. The method of claim 3, further comprising:
receiving the second flooding message sent by other network node in the IGP domain where the present network node is located, and obtaining the path timeslot configuration information carried in the second flooding message; and
in response to that the present network node is determined to be on the forwarding path according to the path timeslot configuration information, configuring the link timeslot of the present network node on the forwarding path according to the path timeslot configuration information and the preset timeslot allocation principle.

6. The method of claim 5, wherein configuring the link timeslot of the present network node on the forwarding path according to the path timeslot configuration information and the preset timeslot allocation principle comprises:
in response to that the preset timeslot allocation principle is the last hop timeslot allocation principle, determining, according to the path timeslot configuration information, an egress link timeslot of a last hop network node of the present network node on the forwarding path, and configuring the egress timeslot of the last hop network node on the forwarding path as an ingress timeslot of the present network node on the forwarding path; and
in response to that the preset timeslot allocation principle is the next hop timeslot allocation principle, determining, according to the path timeslot configuration information, an ingress link timeslot of a next hop network node of the present network node on the forwarding path, and configuring the ingress timeslot of the next hop network node on the forwarding path as an egress timeslot of the present network node on the forwarding path.

7. The method of claim 6, wherein after configuring the link timeslot of the present network node on the forwarding path according to the preset timeslot allocation principle, and after configuring the link timeslot of the present network node on the forwarding path according to the path timeslot configuration information and the preset timeslot allocation principle, the method further comprises:
configuring a timeslot cross relationship from the ingress link timeslot to the egress link timeslot of the present network node on the forwarding path.

8. The method of claim 7, wherein after configuring the timeslot cross relationship from the ingress link timeslot to the egress link timeslot of the present network node on the forwarding path, the method further comprises:
in response to that the present network node is the head node in the IGP domain, establishing a mapping relationship between a port at user side and the egress link timeslot, wherein the port at user side is an input port of a service corresponding to the forwarding path on the present network node; and
in response to that the present network node is a tail node in the IGP domain, establishing a mapping relationship between a port at user side and the ingress link timeslot, wherein the port at user side is an output port of the service corresponding to the forwarding path on the present network node.

9. The method of claim 1, wherein the path timeslot configuration information further comprises specified link timeslots of other network nodes on the forwarding path the method further comprises:
receiving the first flooding message sent by a head node in the IGP domain where the present network node is located, and obtaining the path timeslot configuration information carried in the first flooding message;
according to the path timeslot configuration information, in response to that the present network node is determined to be an intermediate node on the forwarding path and does not allocate a link timeslot, a link timeslot in a corresponding direction is not used, and the forwarding path is in one IGP domain, configuring the link timeslot in the corresponding direction of the present network node on the forwarding path as the specified link timeslot according to a preset timeslot allocation principle, wherein in response to that the preset timeslot allocation principle is a last hop timeslot allocation principle, the corresponding direction is an egress direction, and in response to that the preset timeslot allocation principle is a next hop timeslot allocation principle, the corresponding direction is an ingress direction; and
sending a second flooding message in the IGP domain where the present network node is located, wherein the second flooding message carries the path timeslot configuration information comprising the link timeslot in the corresponding direction of the present network node on the forwarding path.

10. The method of claim 3, wherein after receiving the first flooding message sent by the head node in the IGP domain where the present network node is located, and obtaining the path timeslot configuration information carried in the first flooding message, the method further comprises:
according to the path timeslot configuration information, in response to that the present network node is determined to be an intermediate node on the forwarding path, a tail node in a first IGP domain and a head node in a second IGP domain, and the present network node does not allocate a link timeslot, configuring the link timeslot of the present network node on the forwarding path according to the preset timeslot allocation principle.

11. The method of claim 10, wherein after configuring the link timeslot of the present network node on the forwarding path according to the preset timeslot allocation principle, the method further comprises:
in response to that the forwarding path description information is distributed in a serial distribution mode, sending a first flooding message in the second IGP domain, such that a network node on the forwarding path in the second IGP domain configures a link timeslot of the network node according to the path timeslot configuration information carried in the first flooding message to form a timeslot cross path, wherein the first flooding message carries the path timeslot configuration information comprising the link timeslot of the present network node on the forwarding path.

12. The method of claim 3, wherein after receiving the first flooding message sent by the head node in the IGP domain where the present network node is located, and obtaining the path timeslot configuration information carried in the first flooding message, the method further includes:
according to the path timeslot configuration information, in response to that the present network node is determined to be an intermediate node on the forwarding path, a tail node in a first IGP domain and not belong to a second IGP domain, and the present network node does not allocate a link timeslot, configuring the link timeslot of the present network node on the forwarding path according to the preset timeslot allocation principle; and
sending the link timeslot of the present network node on the forwarding path to the controller, such that the controller sends the link timeslot to a head node in the second IGP domain.

13. The method of claim 3, wherein the forwarding path description information comprises first forwarding path description information and second forwarding path description information, and configuring the link timeslot of the present network node on the forwarding path according to the preset timeslot allocation principle comprises:
configuring a link timeslot of the present network node on a first forwarding path and a link timeslot of the present network node on a second forwarding path according to the preset timeslot allocation principle,
wherein the path timeslot configuration information comprises link timeslots of the present network node on the first forwarding path and the second forwarding path.

14. The method of claim 13, wherein determining that the present network node is the intermediate node on the forwarding path according to the path timeslot configuration information comprises: determining the present network node as the intermediate node on the first forwarding path and/or the second forwarding path according to the path timeslot configuration information; and
configuring the link timeslot of the present network node on the forwarding path comprises:
in response to that the present network node is on the first forwarding path, configuring a link timeslot of the present network node on the first forwarding path; and/or
in response to that the present network node is on the second forwarding path, configuring a link timeslot of the present network node on the second forwarding path.

15. The method of any one of claims 3 to 14, wherein the first flooding message and the second flooding message are ISIS protocol messages or OSPF protocol messages,
the path timeslot configuration information comprises a forwarding path identifier, a bandwidth and a timeslot cross path list,
wherein the timeslot cross path list at least comprises the number of nodes related to the forwarding path and link timeslot allocation information of each node, and the link timeslot allocation information of each node at least comprises a node identifier, an ingress link identifier, an egress link identifier, an ingress link timeslot list, an egress link timeslot list and a flag for indicating the link timeslot allocation state.

16. A computer device, comprising:
at least one processor; and
a storage device having at least one program stored thereon;
the at least one programs, when executed by the at least one processor, cause the at least one processor to implement the timeslot cross path configuration method of any of claims 1 to 15.

17. A computer readable medium, storing a computer program thereon, the computer program, when executed by a processor, causes the processer to implement the timeslot cross path configuration method of any one of claims 1 to 15.
